# FASCICULE DE BREVET EUROPEEN

(11) **EP 4 422 939 B1**
(45) Date de publication et mention de la délivrance du brevet: **11.03.2026**
(21) Numéro de dépôt: 22789270.0
(22) Date de dépôt: 20.09.2022
(51) Int. Cl.: B60W 30/16

(54) **RÉGULATEUR DE VITESSE ADAPTATIF POUR RÉGULER LA VITESSE D'UN VÉHICULE PORTEUR SE RAPPROCHANT D'UN VÉHICULE CIBLE LENT**
ADAPTIVE GESCHWINDIGKEITSREGELUNG ZUR REGELUNG DER GESCHWINDIGKEIT EINES SICH EINEM LANGSAM ANNÄHRENDEN TRÄGERFAHRZEUGS
ADAPTIVE CRUISE CONTROL FOR CONTROLLING THE SPEED OF A CARRIER VEHICLE APPROACHING A SLOW TARGET VEHICLE

(30) Priorité: 25.10.2021 FR 2111289
(43) Date de publication de la demande: 04.09.2024
(73) Titulaire: Stellantis Auto SAS, 78300 Poissy (FR)
(72) Inventeur: HECKETSWEILER, Thierry, 90800 BAVILLIERS (FR); MANCEUR, Malik, 95870 BEZONS (FR); IDLIMAM, Younes, 78450 VILLEPREUX (FR); COHEN, Christel, 92160 ANTONY (FR)
(74) Mandataire: ESIP
(86) Numéro de dépôt international: PCT/FR2022/051764
(87) Numéro de publication internationale: WO 2023/073292

(56) Documents cités:
- DE-A1- 102019 101 662
- US-A1- 2017 066 443

## Description

La présente invention a trait aux dispositifs d'aide à la conduite d'un véhicule automobile, et plus particulièrement aux régulateurs de vitesse adaptatifs et aux véhicules automobiles équipés de tels dispositifs.

Un régulateur de vitesse adaptatif (plus connu sous le nom anglais « Adaptive Cruise Control» ou ACC) ajuste automatiquement la vitesse du véhicule porteur en fonction d'une vitesse de référence et une distance inter-véhicule (ou, de manière équivalente, un temps inter-véhicule) de référence entre le véhicule porteur et le véhicule qui le précède utilisé comme véhicule cible. Ainsi, en présence d'un véhicule cible, le régulateur de vitesse adaptatif régule, en plus de la vitesse du véhicule porteur, la distance le séparant du véhicule cible. En l'absence d'un véhicule cible, la vitesse du véhicule porteur est sensiblement égale à la vitesse de référence.

Cependant, un inconvénient majeur des régulateurs de vitesse adaptatifs existants est la gestion de l'accostage ou l'approche d'un véhicule cible relativement lent par rapport au véhicule porteur. C'est typiquement le cas d'un véhicule porteur circulant à une première vitesse (par exemple, 130 km/h) qui rattrape un camion circulant à une deuxième vitesse bien inférieure à la première (par exemple, 80 km/h). Dans ce cas, le régulateur de vitesse adaptatif est configuré pour systématiquement ralentir, selon une loi de commande prédéfinie, suffisamment tôt pour placer le véhicule porteur derrière le véhicule cible à la distance inter-véhicule de référence.

Plus généralement, pour stabiliser un véhicule porteur rapide derrière un véhicule cible lent à une distance de référence, les régulateurs de vitesse adaptatifs connus sont configurés pour réguler la vitesse du véhicule porteur selon une loi de commande prédéfinie sans aucune autre considération.

En outre, l'état de la technique est connu des documents DE102019101662A1 et US2017066443A1.

Un objet de la présente invention est de pallier au moins en partie les inconvénients précités des régulateurs de vitesse adaptatifs de l'art antérieur.

A cet effet, il est proposé, en premier lieu, un régulateur de vitesse adaptatif pour réguler la vitesse d'un premier véhicule automobile apte à circuler sur une première voie de circulation d'une route dans un premier sens de circulation, ce régulateur de vitesse adaptatif comprenant
- un premier capteur apte à déterminer la vitesse d'un deuxième véhicule automobile circulant devant le premier véhicule automobile sur la première voie de circulation dans le premier sens de circulation;
- un deuxième capteur apte à déterminer si la route comprend une deuxième voie de circulation adjacente à la première voie de circulation, le sens de circulation sur la deuxième voie de circulation étant le premier sens de circulation;

ce régulateur de vitesse adaptatif étant configuré pour réguler, lorsque la vitesse du deuxième véhicule automobile est inférieure d'au moins une valeur prédéfinie à la vitesse du premier véhicule automobile, la vitesse du premier véhicule automobile
   - selon une première loi de commande lorsqu'il est déterminé que la route comprend ladite deuxième voie de circulation;
   - selon une deuxième loi de commande différente de la première loi de commande lorsqu'il est déterminé que la route ne comprend pas ladite deuxième voie de circulation,
caractérisé en ce que la valeur prédéfinie est un pourcentage d'une limitation de vitesse applicable sur la route.

Diverses caractéristiques supplémentaires peuvent être prévues, seules ou en combinaison :
- la première loi de commande régule la vitesse du premier véhicule automobile de sorte que ce premier véhicule automobile ait une accélération négative décroissante ;
- la deuxième loi de commande régule la vitesse du premier véhicule automobile de sorte que ce premier véhicule automobile ait une accélération négative croissante ;
- le deuxième capteur est configuré pour déterminer si la route est à chaussées séparées ou non ;
- la valeur prédéfinie est une constante ;
- le deuxième capteur comprend un capteur d'image, un module de communication véhiculaire, et/ou un module de navigation.

Il est proposé, en deuxième lieu, un véhicule automobile comprenant le régulateur de vitesse adaptatif présenté ci-dessus.

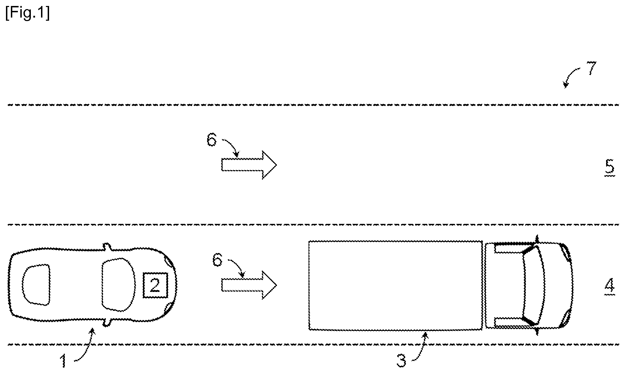

D'autres caractéristiques et avantages de l'invention apparaîtront plus clairement et de manière concrète à la lecture de la description ci-après de modes de réalisation, laquelle est faite en référence à la figure [Fig.1] qui illustre schématiquement un véhicule automobile pourvu d'un régulateur de vitesse adaptatif selon divers modes de réalisation.

En se référant à la figure 1, il est affiché un régulateur de vitesse adaptatif **2** équipant un premier véhicule **1** automobile (aussi dit véhicule porteur, véhicule hôte ou égo-véhicule) apte à circuler sur une première voie **4** de circulation d'une route **7** dans un sens **6** de circulation.

Le régulateur de vitesse adaptatif **2** comprend un premier capteur (notamment, un radar, une caméra, un laser, ou un lidar frontal, ou un module de communication véhiculaire de type véhicule-à-véhicule) apte à détecter la présence d'un deuxième véhicule **3** automobile (véhicule cible) circulant devant le premier véhicule **1** automobile sur la même voie **4** de circulation et le même sens **6** de circulation que ce premier véhicule **1** automobile. Le premier capteur est également apte à déterminer la distance inter-véhicule, et la vitesse du deuxième véhicule **3** automobile.

Le régulateur de vitesse adaptatif **2** comprend, en outre, un deuxième capteur apte à déterminer si la route **7** comprend une deuxième voie **5** de circulation adjacente à la première voie **4** de circulation ayant le même sens **6** de circulation que la première voie **4** de circulation. La deuxième voie **5** de circulation peut être à gauche ou à droite de la première voie **4** de circulation (notamment, en fonction des règles du code de la route en vigueur).

Le deuxième capteur comprend, par exemple,
- un capteur d'image (notamment, une ou plusieurs caméras frontales pourvues d'algorithmes de traitement d'image) apte à détecter une ligne de marquage au sol séparant deux voies **4, 5** de circulation adjacentes ayant un même sens **6** de circulation, une indication concernant les voies **4, 5** de circulation signalée par un panneau de signalisation routière, et/ou une route **7** à chaussées séparées (telle qu'une autoroute);
- un module de communication véhiculaire (de type véhicule-avec-tout plus connu sous le nom anglais « Vehicle-to-Everything », Véhicule-à-Véhicule, Infrastructure-à-Véhicule, Véhicule-à-Dispositif, Véhicule-à-Infrastructure, ou Véhicule-à-Réseau par exemple) configuré pour recevoir une information indiquant si la route **7** comprend une deuxième voie **5** de circulation adjacente à la première voie **4** de circulation et ayant le même sens **6** de circulation; et/ou
- un module de navigation comprenant un capteur de géolocalisation (de type GPS, GLONASS ou équivalent) et des données cartographiques concernant la route **7.**

Lorsque la vitesse du deuxième véhicule **3** automobile est inférieure d'au moins une valeur prédéfinie à la vitesse du premier véhicule **1** automobile, le régulateur de vitesse adaptatif **2** est configuré pour réguler la vitesse du premier véhicule **1** automobile
- selon une première loi de commande lorsqu'il est déterminé que la route **7** comprend ladite deuxième voie **5** de circulation; et
- selon une deuxième loi de commande différente de la première lorsque la route **7** ne comprend pas ladite deuxième voie **5** de circulation.

La valeur prédéfinie peut être une constante (par exemple, 10 km/h, 15 km/h, 20 km/h, 25 km/h, ou 30 km/h), un pourcentage de la vitesse du premier véhicule **1** automobile et/ou d'une limitation de vitesse applicable sur la route **7** (par exemple, 15%, 20%, 25% ou 30%).

Une loi de commande (ou de contrôle) désigne ici une fonction ou une relation d'asservissement de la vitesse du premier véhicule **1** automobile en fonction, entre autres, de la distance inter-véhicule. Deux lois de commande différentes permettent d'avoir deux profiles différents d'accostage/d'approche du deuxième véhicule **3** automobile lent. Le régulateur de vitesse adaptatif **2** est pourvu d'une première loi de commande associée à une route **7** comprenant une deuxième voie **5** de circulation, et d'une deuxième loi de commande associée à une route **7** ne comprenant pas une deuxième voie **5** de circulation.

En fonction de l'existence ou non de la deuxième voie **5** de circulation, la vitesse du premier véhicule **1** automobile est asservie par le régulateur de vitesse adaptatif **2** selon, respectivement, la première ou la deuxième loi de commande sur la distance inter-véhicule (ou, de manière équivalente, sur le temps inter-véhicule. Lorsque le premier véhicule **1** automobile rattrape un deuxième véhicule **3** automobile lent, la loi de commande de sa vitesse est choisie en fonction de l'existence ou non dans la route **7** de voies **4, 5** de circulation adjacentes et ayant un même sens **6** de circulation que la voie **4** de circulation actuelle du premier véhicule **1** automobile.

Le régulateur de vitesse adaptatif **2** est, en effet, configuré pour détecter un véhicule **3** automobile cible relativement lent par rapport au véhicule **1** automobile porteur et adapter, en conséquence, la loi de commande de la vitesse du véhicule **1** automobile porteur. Le deuxième véhicule **3** automobile est, par exemple, un camion, un jeune conducteur, un conducteur très prudent, un convoi exceptionnel, ou un véhicule à l'arrêt.

Dans un mode de réalisation, la première loi de commande comprend un niveau de freinage (ou de ralentissement) qui augmente progressivement pendant l'approche du deuxième véhicule **3** automobile. La première loi de commande régule, dans un mode de réalisation, la vitesse du premier véhicule **1** automobile de sorte que ce premier véhicule **1** automobile ait une accélération négative (une décélération) décroissante (c.à.d. croissante en valeur absolue). Plus généralement, la première loi de commande permet, au lieu de ralentir dès la détection du deuxième véhicule **3** automobile, de retarder l'accostage ou le placement du premier véhicule **1** automobile derrière le deuxième véhicule **3** automobile au temps (ou, à la distance) inter-véhicule de référence. La première loi de commande permet ainsi de réguler la vitesse du premier véhicule **1** automobile de sorte que ce premier véhicule **1** automobile ait une accélération retardée et négative croissante. Avantageusement, la première loi de commande donne la possibilité au conducteur du premier véhicule **1** automobile d'effectuer une manœuvre de dépassement du deuxième véhicule **3** automobile (c.à.d. une manœuvre de changement de voie depuis la première voie **4** de circulation vers la deuxième voie **5** de circulation). En effet, dans la pratique, lorsqu'un conducteur humain rattrape un véhicule lent (par exemple, lorsqu'il circule à 130 km/h et rattrape un camion qui circule à 80 km/h), il tend souvent à le dépasser dès sa détection, sans attendre la fin de l'accostage (c.à.d. sans décomposer la manœuvre en accostage derrière le deuxième véhicule **3** automobile lent puis dépassement). Il en résulte avantageusement un comportement du régulateur de vitesse adaptatif **2** proche de celui d'un conducteur humain. L'anticipation d'un changement de voie lors d'approche d'un deuxième véhicule **3** automobile lent permet avantageusement de réaliser cette manœuvre de façon sûre, fluide, et confortable pour le conducteur du premier véhicule **1** automobile.

Dans un autre mode de réalisation, la deuxième loi de commande anticipe la phase de freinage pour placer le premier véhicule **1** automobile derrière le deuxième véhicule **3** automobile au temps (ou à la distance) inter-véhicule de référence. La deuxième loi de commande régule, dans un mode de réalisation, la vitesse du premier véhicule **1** automobile de sorte que ce premier véhicule **1** automobile ait une accélération négative (décélération) croissante (c.à.d. décroissante en valeur absolue). La deuxième loi de commande débute la phase de freinage dès la détection du deuxième véhicule **3** automobile plus lent. Il en résulte avantageusement un freinage plus anticipatif et constant permettant de réduire le niveau de freinage global, le confort étant ici privilégié.

Le régulateur de vitesse adaptatif **2** module (c.à.d. retarde ou anticipe) le ralentissement/freinage du premier véhicule **1** automobile en fonction de la présence ou l'absence de la deuxième voie **5** de circulation.

Avantageusement, les modes de réalisation décrits ci-dessus
- adaptent le profil d'accostage ou, autrement dit, la stratégie de freinage pour placer/stabiliser le véhicule porteur derrière un véhicule cible lent à la distance inter-véhicule de référence en fonction du type de la route **7** empruntée. Un premier profil d'accostage dans lequel le freinage est retardé ou un deuxième profil d'accostage dans lequel le freinage est anticipé peut être utilisé selon que le véhicule porteur circule, par exemple, sur une route à chaussées séparées (notamment, une autoroute) ou non ;
- améliorent l'agrément globale du régulateur de vitesse adaptatif **2** dont le comportement est proche de celui d'un conducteur humain.

## Revendications

1. Régulateur de vitesse adaptatif (**2**) pour réguler la vitesse d'un premier véhicule (**1**) automobile apte à circuler sur une première voie (**4**) de circulation d'une route (**7**) dans un premier sens (**6**) de circulation, ce régulateur de vitesse adaptatif (**2**) comprenant
- un premier capteur apte à déterminer la vitesse d'un deuxième véhicule (**3**) automobile circulant devant le premier véhicule (**1**) automobile sur la première voie (**4**) de circulation dans le premier sens (**6**) de circulation;
- un deuxième capteur apte à déterminer si la route (**7**) comprend une deuxième voie (**5**) de circulation adjacente à la première voie (**4**) de circulation, le sens (**6**) de circulation sur la deuxième voie (**5**) de circulation étant le premier sens (**6**) de circulation;
ce régulateur de vitesse adaptatif (**2**) étant configuré pour réguler, lorsque la vitesse du deuxième véhicule (**3**) automobile est inférieure d'au moins une valeur prédéfinie à la vitesse du premier véhicule (**1**) automobile, la vitesse du premier véhicule (**1**) automobile
- selon une première loi de commande lorsqu'il est déterminé que la route (**7**) comprend ladite deuxième voie (**5**) de circulation;
- selon une deuxième loi de commande différente de la première loi de commande lorsqu'il est déterminé que la route (**7**) ne comprend pas ladite deuxième voie (**5**) de circulation,
**caractérisé en ce que** la valeur prédéfinie est un pourcentage d'une limitation de vitesse applicable sur la route (**7**).

2. Régulateur de vitesse adaptatif (**2**) selon la revendication précédente, **caractérisé en ce que** la première loi de commande régule la vitesse du premier véhicule (**1**) automobile de sorte que ce premier véhicule (**1**) automobile ait une accélération négative décroissante.

3. Régulateur de vitesse adaptatif (**2**) selon la revendication 1 ou 2, **caractérisé en ce que** la deuxième loi de commande régule la vitesse du premier véhicule (**1**) automobile de sorte que ce premier véhicule (**1**) automobile ait une accélération négative croissante.

4. Régulateur de vitesse adaptatif (**2**) selon l'une quelconque des revendications précédentes, **caractérisé en ce que** le deuxième capteur est configuré pour déterminer si la route (**7**) est à chaussées séparées ou non.

5. Régulateur de vitesse adaptatif (**2**) selon l'une quelconque des revendications 1 à 4, **caractérisé en ce que** la valeur prédéfinie est une constante.

6. Régulateur de vitesse adaptatif (**2**) selon l'une quelconque des revendications précédentes, **caractérisé en ce que** le deuxième capteur comprend un capteur d'image, un module de communication véhiculaire, et/ou un module de navigation.

7. Véhicule (**1**) automobile comprenant un régulateur de vitesse adaptatif (**2**) selon l'une quelconque des revendications précédentes.

## Patentansprüche

1. Adaptiver Geschwindigkeitsregler (2) zum Regeln der Geschwindigkeit eines ersten Kraftfahrzeugs (1), das auf einer ersten Fahrspur (4) einer Straße (7) in einer ersten Fahrtrichtung (6) fahren kann, wobei der adaptive Geschwindigkeitsregler (2)
- einen ersten Sensor zum Bestimmen der Geschwindigkeit eines zweiten Kraftfahrzeugs (3), das vor dem ersten Kraftfahrzeug (1) auf der ersten Fahrspur (4) in der ersten Fahrtrichtung (6) fährt;
- einen zweiten Sensor zum Bestimmen, ob die Straße (7) umfasst eine zweite Fahrspur (5), die an die erste Fahrspur (4) angrenzt, wobei die Fahrtrichtung (6) auf der zweiten Fahrspur (5) die erste Fahrtrichtung (6) ist; wobei
dieser adaptive Geschwindigkeitsregler (2) so konfiguriert ist, dass er, wenn die Geschwindigkeit des zweiten Kraftfahrzeugs (3) um mindestens einen vorbestimmten Wert niedriger als die Geschwindigkeit des ersten Kraftfahrzeugs (1) ist, die Geschwindigkeit des ersten Kraftfahrzeugs (1) regelt - gemäß einem ersten Steuergesetz, wenn bestimmt wird, dass die Fahrspur (7) die zweite Fahrspur (5) umfasst;
- gemäß einem zweiten Steuergesetz, das sich von dem ersten Steuergesetz unterscheidet Wenn festgestellt wird, dass die Straße (7) die zweite Fahrspur (5) nicht umfasst, **dadurch**
**gekennzeichnet, dass** der vorgegebene Wert ein Prozentsatz einer auf die Straße (7) anwendbaren Geschwindigkeitsbegrenzung ist.

2. Adaptiver Geschwindigkeitsregler (2) nach dem vorhergehenden Anspruch, **dadurch gekennzeichnet, dass** das erste Steuergesetz die Geschwindigkeit des ersten Kraftfahrzeugs (1) derart regelt, dass dieses erste Kraftfahrzeug (1) eine abnehmende negative Beschleunigung aufweist.

3. Adaptiver Geschwindigkeitsregler (2) nach Anspruch 1 oder 2, **dadurch gekennzeichnet, dass** das zweite Steuergesetz die Geschwindigkeit des ersten Kraftfahrzeugs (1) so regelt, dass dieses erste Kraftfahrzeug (1) eine zunehmende negative Beschleunigung aufweist.

4. Adaptiver Geschwindigkeitsregler (2) nach einem der vorhergehenden Ansprüche, **dadurch gekennzeichnet, dass** der zweite Sensor konfiguriert ist, um zu bestimmen, ob die Straße (7) eine getrennte Fahrbahn hat oder nicht.

5. Adaptiver Geschwindigkeitsregler (2) nach einem der Ansprüche 1 bis 4, **dadurch gekennzeichnet, dass** der vorgegebene Wert eine Konstante ist.

6. Adaptiver Geschwindigkeitsregler (2) nach einem der vorhergehenden Ansprüche, **dadurch gekennzeichnet, dass** der zweite Sensor einen Bildsensor, ein Fahrzeugkommunikationsmodul und/oder ein Navigationsmodul umfasst.

7. Kraftfahrzeug (1) mit einem adaptiven Geschwindigkeitsregler (2) nach einem der vorhergehenden Ansprüche.

## Claims

1. Adaptive speed regulator (2) for regulating the speed of a first motor vehicle (1) able to travel on a first travel lane (4) of a highway (7) in a first travel direction (6), this adaptive speed regulator (2) comprising
- a first sensor able to determine the speed of a second motor vehicle (3) travelling in front of the first motor vehicle (1) on the first travel lane (4) in the first travel direction (6);
- a second sensor able to determine whether the highway (7) comprises a second travel lane (5) adjacent to the first travel lane (4), the travel direction (6) being the first travel direction) of the adaptive speed regulator (2) being configured to regulate the speed of the second travel),
this adaptive speed) motor vehicle (3) is lower by at least one predefined value than the speed of the first motor
vehicle (1), the speed of the first motor vehicle (I)-according to a first order law when it is determined that the highway (7) comprises said second lane (5) of circulation;
- according to a second order law different from the first order law when it is determined that the highway (7) does not comprise said second lane (5) of circulation,
wherein the predefined value is a percentage of a speed limitation applicable on the highway (7).

2. Adaptive speed regulator (2) according to the previous claim, wherein the first order law regulates the speed of the first motor vehicle (1) so that this first motor vehicle (1) has a decreasing negative acceleration.

3. Adaptive speed regulator (2) according to claim 1 or 2, wherein the second order law regulates the speed of the first motor vehicle (1) so that this first motor vehicle (1) has an increasing negative acceleration.

4. Adaptive speed regulator (2) according to any one of the previous claims, wherein the second sensor is configured to determine whether the road (7) has separate roads or not.

5. Adaptive cruise control (2) according to any one of claims 1 to 4, **characterised in that** the predefined value is a constant.

6. Adaptive cruise control (2) according to any one of the previous claims, wherein the second sensor comprises an image sensor, a vehicle communication module, and/or a navigation module.

7. Motor vehicle (1) comprising an adaptive cruise control (2) according to any one of the previous claims.
